# EUROPÄISCHE PATENTSCHRIFT

(11) **EP 0 629 801 B1**
(45) Veröffentlichungstag und Bekanntmachung des Hinweises auf die Patenterteilung: **12.03.1997**
(21) Anmeldenummer: 94108057.4
(22) Anmeldetag: 26.05.1994
(51) Int. Cl.: F16K 3/02

(54) **Schieberarmatur mit Dichtung**
Gate valve with sealing
Robinet-vanne avec garniture

(30) Priorität: 18.06.1993 DE 4320185
(43) Veröffentlichungstag der Anmeldung: 21.12.1994
(73) Patentinhaber: INDUSTRIEBERATUNG SCHMIDT GmbH, D-90475 Nürnberg (DE)
(72) Erfinder: Schmidt, Horst, D-90475 Nürnberg (DE)
(74) Vertreter: Böhme, Volker, Dipl.-Ing.

(56) Entgegenhaltungen:
- DE-B- 1 146 319
- GB-A- N6 417
- US-A- 3 743 244
- US-A- 4 313 458

## Beschreibung

Die Erfindung betrifft eine Schieberarmatur mit Dichtung, bei der ein Gestellrahmen zur Anbringung an einer eine Auslaßöffnung aufweisenden Wand ausgebildet ist und an einer Wandplatte einen der Auslaßöffnung zugeordneten Durchlaßdurchbruch aufweist, bei der eine Schieberplatte mittels einer an dem Gestellrahmen angebrachten Stelleinrichtung in dem Gestellrahmen zwischen einer den Durchlaßdurchbruch überdeckenden Schließstellung und einer Offenstellung hin- und herbewegbar ist, bei der bei Schließstellung der Schieberplatte ein quer zur Bewegungsrichtung der Schieberplatte elastisch zusammendrückbarer Dichtungsring sich entlang dem Durchlaßdurchbruch erstreckt, bei der die Schieberplatte in der Schließstellung mittels Keilgebilden unter Kompression des Dichtungsringes quer zur Bewegungsrichtung der Schieberplatte hin zum Durchlaßdurchbruch gedrückt ist und bei der bei Schließstellung ein Dichtungsmittel zur Anlage an einem die Wand-Auslaßöffnung umgebenden Wandrandstreifen vorgesehen ist und der Dichtungsring einerseits an der Schieberplatte anliegt.

Die GB-A-6417 zeigt den grundsätzlichen Aufbau einer Schieberarmatur dieser Art.

Bei einer Solchen bekannten Schieberarmatur wird eine Dichtung zwischen der Wandplatte des Gestellrahmens und dem die Wand-Auslaßöffnung umgebenden Wand-Randstreifen vorgesehen, wozu die Wandplatte entsprechend fest gegen die Wand gedrückt sein muß. Da die Wandplatte entsprechend fest gegen die Wand gedrückt sein muß und die Wand nie planeben, d.h. stets etwas uneben ist, sind Verwerfungen der Wandplatte und des Gestellrahmens nicht zu vermeiden. Der Dichtungsring ist eine Ringdichtung und ist an der Schieberplatte befestigt und wird bei Schließstellung gegen den den Durchlaßdurchbruch begrenzenden Plattenrandstreifen gedrückt, wobei der Durchlaßdurchbruch in etwa so weit ist wie die Auslaßöffnung. Wenn der Gestellrahmen verworfen ist, dann läßt sich eine völlige Dichtung zwischen Schieberplatte und Wandplatte nur schwer erreichen.

Eine Aufgabe der Erfindung ist es daher, eine Schieberarmatur zu schaffen, bei der die leckfreie völlige Abdichtung der Wand-Auslaßöffnung mittels der in Schließstellung befindlichen Schieberplatte mit verringertem Aufwand bzw. mit vereinfachten Mitteln erreicht ist. Die erfindungsgemäße Schieberarmatur ist, diese Aufgabe lösend, dadurch gekennzeichnet, daß der Durchlaßdurchbruch der Wandplatte relativ zur Auslaßöffnung der Wand erweitert ist und daß der Dichtungsring unabhängig von der Schieberplatte ist und in der Ebene der Wandplatte im Durchlaßdurchbruch angeordnet ist, wobei der Dichtungsring anderderseits zur Anlage an dem die Auslaßöffnung umgebenden Wandrandstreifen vorgesehen ist.

Der Gestellrahmen wird unabhängig von Dichtungsmaßnahmen zwischen Wandplatte und Wand angebracht und kann nach der Anbringung verworfen sein, ohne eine Dichtung zu beeinträchtigen. Durch die Querbewegung der Schieberplatte beim Eintritt in die Schließstellung wird die Schieberplatte unmittelbar gegen die Wand am Wandrandstreifen abgedichtet, wobei auch dann eine völlige Abdichtung vorliegt, wenn sich der Gestellrahmen und dessen Wandplatte verworfen haben. Die Befestigung des Gestellrahmens an der Wand ist von der Dichtfunktion getrennt;
die Dichtungen zur Wand und zur Schieberplatte sind zusammengefaßt.

Besonders zweckmäßig und vorteilhaft ist es, wenn der Dichtungsring in dem Durchlaßdurchbruch querbeweglich ist. Dadurch werden Wandunebenheiten verbessert ausgeglichen und lassen sich Fertigungstoleranzen ausgleichen.

Besonders zweckmäßig und vorteilhaft ist es sodann, wenn der Dichtungsring einen metallenen Trägerring aufweist, der an zwei einander gegenüberliegenden Seiten mit je einer Ringdichtung versehen ist. Die Ringdichtungen lassen sich vereinfacht austauschen. Sie können von unterschiedlichem Material, unterschiedlicher Form und unterschiedlicher Härte sein. Für die Ringdichtungen wird in der Regel handelsübliche O-Ring-Meterware verwendet, wodurch die Ersatzteilhaltung vereinfacht ist. Der Trägerring mit den Ringdichtungen kann vereinfacht demontiert werden, ohne daß der Gestellrahmen von der Wand genommen werden muß.

Besonders zweckmäßig und vorteilhaft ist es ebenso, wenn die Schieberarmatur eine Schweißkonstruktion aus VA-Blechen ist. Die sonst übliche steife und schwere Ausführung von gehäuselosen Schieberarmaturen entfällt also. Es ist eine Leichtbauweise und eine entsprechend preiswerte Fertigung gegeben. Die VA-Bleche sind in der Regel normale VA-Bleche und zwar aus nichtrostendem Stahl.

Eine besonders zweckmäßige und vorteilhafte Ausführungsform liegt vor, wenn die Wandplatte mit Befestigungsstücken versehen ist, die quer zur Plattenfläche vorspringen. Bei dieser Bauweise hat der Gestellrahmen abgesehen von den Befestigungsstücken Abstand von der Wand, sodaß Unebenheiten der Wand weniger Einfluß auf den Gestellrahmen haben und mehr Platz zur Unterbringung des Dichtungsringes gegeben ist.

Besonders zweckmäßig und vorteilhaft ist es dabei, wenn Verstärkungsrippen an den Befestigungsstücken, die seitlich wegragen, und an anschließenden Rahmenstreben des Gestellrahmens vorgesehen sind. Diese Verstärkungsrippen verfestigen die seitlich wegragenden Befestigungsstücke und deren Anbringung am übrigen Gestellrahmen.

Besonders zweckmäßig und vorteilhaft ist es auch, wenn die Schieberplatte mit über deren Breite verlaufenden Verstärkungsrippen versehen ist, die sich durch die Keilgebilde der Schieberplatte erstrecken. Auch diese Verstärkungsrippen sind in Verbindung mit der Blech-Schweißkonstruktion von besonderem Vorteil. Sie geben der Schieberplatte unabhängig vom Gestellrahmen Biegefestigkeit.

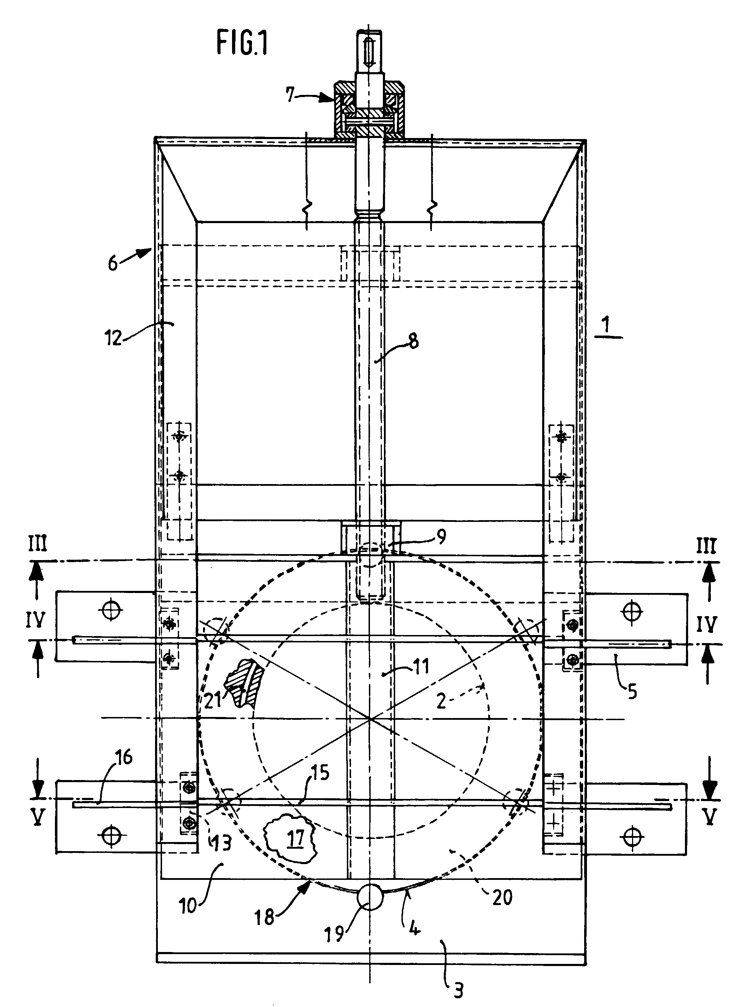

In der Zeichnung ist eine bevorzugte Ausführungsform der Erfindung dargestellt und zeigt
- Fig.1: eine Vorderansicht einer Schieberarmatur mit Dichtung,

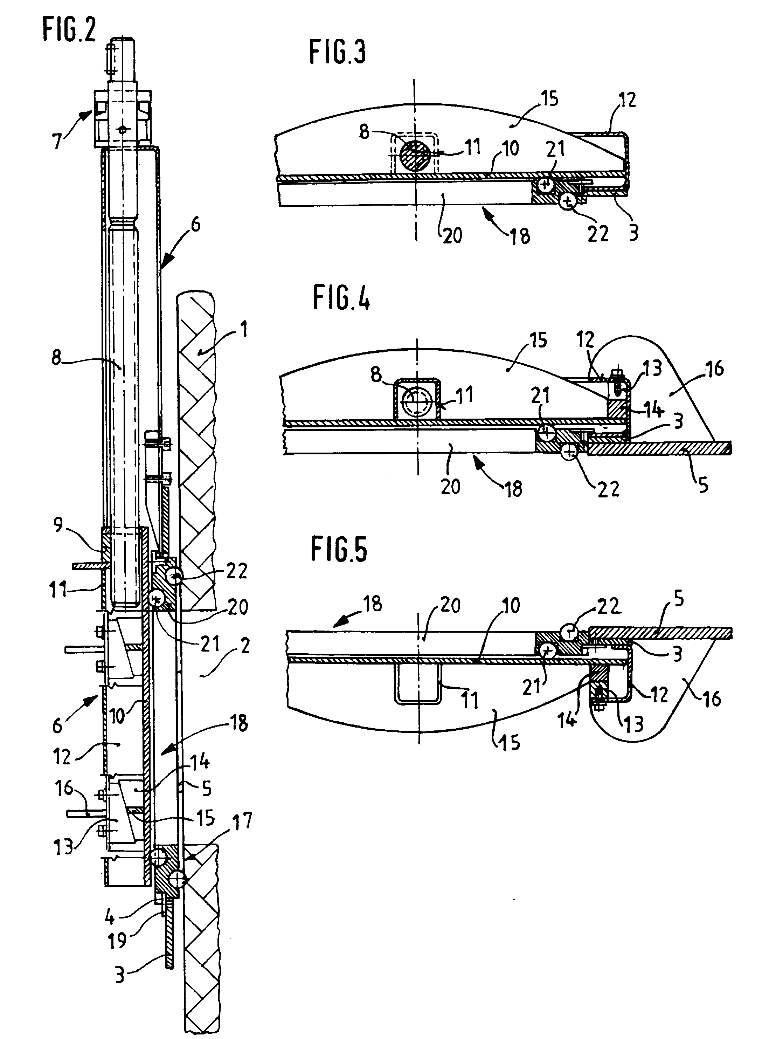

- Fig.2: einen Längsschnitt der Schieberarmatur gemäß Anspruch 1,
- Fig. 3: einen Schnitt gemäß Linie III-III in Fig. 1,
- Fig.4: einen Schnitt gemäß Linie IV-IV in Fig. 1 und
- Fig.5: einen Schnitt gemäß Linie V-V in Fig. 1.

Die Schieberarmatur gemäß Zeichnung ist für eine Wand 1 bestimmt und an der Wand 1 angebracht, in der eine Auslaßöffnung 2 eines nicht näher gezeigten Kanals vorgesehen ist. Die Schieberarmatur weist einen Gestellrahmen 6 auf, der eine Wandplatte 3 umfaßt, die im Bereich der Auslaßöffnung 2 vorgesehen ist und mit einem Durchlaßdurchbruch 4 versehen ist, der koaxial mit der Auslaßöffnung angeordnet ist. Die Wandplatte 3 ist an ihren beiden Längsseiten mit je zwei seitlich wegragenden Befestigungsstücken 5 versehen, die in Richtung zur Wand 1 vorspringen, an dieser anliegen und an dieser angeschraubt sind. Auf diese Weise besitzt die Wandplatte 3 rund um die Auslaßöffnung 2 und abgesehen von den Befestigungsstücken 5 Abstand von der Wand 1. Der Gestellrahmen 6 trägt oben eine Stelleinrichtung 7, zu der eine abwärts ragende Spindel 8 gehört, deren unteres Ende durch einen Gewindeblock 9 ragt, der an einer Schieberplatte 10 angebracht ist. Bei Drehung der Spindel 8 wandern der Gewindeblock und die Schieberplatte auf oder ab. Im Bereich der Schieberplatte 10 ist an dieser ein Kanal 11 vorgesehen, der die Spindel 8 aufnimmt, wenn sich die Schieberplatte in eine Offenstellung nach oben bewegt.

Die Schieberplatte 10 ist an den beiden Längsseiten von je einer Rahmenstrebe 12 des Gestellrahmens 6 geführt, an welchem Keilgebilde 13 angebracht sind, die mit Keilgebilden 14 zusammenwirken, die an der Schieberplatte 10 angebracht sind. Wenn die Schieberplatte 10 in die in der Zeichnung gezeigte Schließstellung gelangt, dann treffen die beiden einander jeweils zugeordneten Keilgebilde 13,14 aufeinander und die Schieberplatte 10 wird in Richtung zur Wand 1 gedrückt. Es sind vier Paare von Keilgebilden 13,14 vorgesehen, von denen jedes einem der Befestigungsstücke 5 zugeordnet angeordnet ist. Die Keilgebilde sind jeweils kurze Keilstücke. Die Schieberplatte 10 und die Wandplatte 3 sind an der der Wand 1 abgewendeten Seite mit Verstärkungsrippen 15,16 versehen. Es trägt die Schieberplatte 10 drei Verstärkungsrippen 15, die sich quer zur Spindel 8 über die gesamte Schieberplatte erstrecken. Weiterhin sind vier Verstärkungsrippen 16 vorgesehen, von denen sich jede auf eines der seitlich wegragenden Befestigungsstücke 5 und einen daran anschließenden Bereich der Wandplatte 3 erstreckt. Zwei der Verstärkungsrippen 15 durchdringen jeweils endseits eines der Keilgebilde 14 der Schieberplatte 10. Jede Verstärkungsrippe 16 erstreckt sich von dem Befestigungsstück 5 auf die benachbarte Rahmenstrebe 12 des Stellrahmens 6.

Der Durchlaßdurchbruch 4 der Wandplatte 3 ist im Durchmesser größer als die Auslaßöffnung 2 der Wand 1 und die Auslaßöffnung ist zur Schieberarmatur hin von einem Wandrandstreifen 17 umgeben. Parallel zu diesem kreisförmig in sich geschlossenen Wandrandstreifen 17 ist ein Dichtungsring 18 vorgesehen, der sich in dem Durchlaßdurchbruch 4 befindet. Ein radial vorspringender Sims des Dichtungsringes 18 ist von einem Haltestück 19 überfaßt, das an die Wandplatte 3 geschraubt ist, wodurch eine leichtere Montage bei Querbeweglichkeit des Dichtungsringes gegeben ist. Der Dichtungsring 18 umfaßt einen metallenen Trägerring 20, der zur Wand 1 und zur Schieberplatte 10 hin je eine umlaufende Nut aufweist, in die jeweils eine umlaufende Ringdichtung 21,22 eingelegt ist, die aus der Nut herausragt bzw. gegenüber dem Trägerring 20 vorsteht. Die Ringdichtung 22 zur Wand 1 ist gegenüber der Ringdichtung 21 zur Schieberplatte 10 radial nach außen versetzt, um einen axial dünneren Dichtungsring zu erhalten.

## Patentansprüche

1. Schieberarmatur mit Dichtung,
bei der ein Gestellrahmen (6) zur Anbringung an einer eine Auslaßöffnung (2) aufweisenden Wand (1) ausgebildet ist und an einer Wandplatte (3) einen der Auslaßöffnung zugeordneten Durchlaßdurchbruch (4) aufweist,
bei der eine Schieberplatte (10) mittels einer an dem Gestellrahmen (6) angebrachten Stelleinrichtung (9) in dem Gestellrahmen zwischen einer den Durchlaßdurchbruch (4) überdeckenden Schließstellung und einer Offenstellung hin- und herbewegbar ist,
bei der bei Schließstellung der Schieberplatte (10) ein quer zur Bewegungsrichtung der Schieberplatte elastisch zusammendrückbarer Dichtungsring (18) sich entlang dem Durchlaßdurchbruch (4) erstreckt,
bei dem die Schieberplatte (10) in die Schließstellung mittels Keilgebilden (13, 14) unter Kompression des Dichtungsringes quer zur Bewegungsrichtung der Schieberplatte hin zum Durchlaßdurchbruch gedrückt ist und
bei der bei Schließstellung ein Dichtungsmittel (22) zur Anlage an einem die Wand-Auslaßöffnung (2) umgebenden Wandrandstreifen (17) vorgesehen ist und der Dichtungsring (18) einerseits an der Schieberplatte (10) anliegt,
**dadurch gekennzeichnet,**
daß der Durchlaßdurchbruch (4) der Wandplatte (3) relativ zur Auslaßöffnung (2) der Wand (1) erweitert ist und
daß der Dichtungsring (18) unabhängig von der Schieberplatte (10) ist und in der Ebene der Wandplatte (3) im Durchlaßdurchbruch (4) angeordnet ist, wobei der Dichtungsring (18) andererseits zur Anlage an dem die Auslaßöffnung (2) umgebenden Wandrandstreifen (17) vorgesehen ist.

2. Schieberarmatur nach Anspruch 1, **dadurch gekennzeichnet,** daß der Dichtungsring (18) in dem Durchlaßdurchbruch (4) querbeweglich ist.

3. Schieberarmatur nach Anspruch 1 oder 2, **dadurch gekennzeichnet,** daß der Dichtungsring (18) einen metallenen Trägerring (20) aufweist, der an zwei einander gegenüberliegenden Seiten mit je einer Ringdichtung (21,22) versehen ist.

4. Schieberarmatur nach Anspruch 1, 2 oder 3, **dadurch gekennzeichnet,** daß sie eine Schweißkonstruktion aus VA-Blechen ist.

5. Schieberarmatur nach einem der vorhergehenden Ansprüche, **dadurch gekennzeichnet,** daß die Wandplatte (3) mit Befestigungsstücken (5) versehen ist, die quer zur Plattenfläche vorspringen.

6. Schieberarmatur nach Anspruch 5, **dadurch gekennzeichnet,** daß Verstärkungsrippen (16) an den Befestigungsstücken (5), die seitlich wegragen, und an anschließenden Rahmenstreben (12) des Gestellrahmens (6) vorgesehen sind.

7. Schieberarmatur nach einem der vorhergehenden Ansprüche, **dadurch gekennzeichnet,** daß die Schieberplatte (10) mit über deren Breite verlaufenden Verstärkungsrippen (15) versehen ist, die sich durch die Keilgebilde (14) der Schieberplatte (10) erstrecken.

8. Schieberarmatur nach einem der vorhergehenden Ansprüche, **dadurch gekennzeichnet,** daß ein radial vorspringender Sims des Dichtungsringes (18) von einem Haltestück (19) überfaßt ist, das an die Wandplatte (3) geschraubt ist.

9. Schieberarmatur nach einem der Ansprüche 3 bis 8, **dadurch gekennzeichnet,** daß die der Wand (1) zugeordnete Ringdichtung (22) gegenüber der der Schieberplatte (10) zugeordneten Ringdichtung (21) radial nach außen versetzt ist.

## Claims

1. A slide valve with a seal,
in which a support frame (6) is formed for application to a wall (1) having an outlet opening (2) and is provided on a wall plate (3) with a through aperture (4) associated with the outlet opening;
in which a slide plate (10) can be reciprocated in the support frame (6) between a closed position covering the through aperture (4) and an open position by means of a displacement device (9) mounted on the support frame;
in which a sealing ring (18) resiliently compressible transversely to the direction of movement of the slide plate (10) extends along the through aperture (4) when the slide plate is in the closed position;
in which the slide plate (10) is pressed into the closed position by means of wedge structures (13, 14) with compression of the sealing ring transversely to the direction of movement of the slide plate towards the through aperture, and
in which in the closed position a sealing means (22) is provided for resting against a wall-edge strip (17) surrounding the outlet opening (2) of the wall and the sealing ring (18) rests against the slide plate (10) on one side,
**characterized in that**
the through aperture (4) of the wall plate (3) is widened relative to the outlet opening (2) of the wall (1), and
the sealing ring (18) is independent of the slide plate (10) and is situated in the through aperture (4) in the plane of the the wall plate (3), wherein the sealing ring (18) is provided on the other side for resting against the wall-edge strip (17) surrounding the outlet opening (2).

2. A slide valve according to Claim 1, **characterized in that** the sealing ring (18) is movable transversely in the through aperture (4).

3. A slide valve according to Claim 1 or 2, **characterized in that** the sealing ring (18) ) has a metallic support ring (20) which is provided on two mutually opposite sides with one annular seal (21, 22) in each case.

4. A slide valve according to Claim 1, 2 or 3, **characterized in that** it is a welded structure of VA sheets.

5. A slide valve according to one of the preceding Claims, **characterized in that** the wall plate (3) is provided with fastening members (5) which project transversely to the face of the plate.

6. A slide valve according to Claim 5, **characterized in that** reinforcement ribs (16) are provided on the fastening members (5), which project laterally, and on adjoining braces (12) of the support frame (6).

7. A slide valve according to one of the preceding Claims, **characterized in that** the slide plate (10) is provided with reinforcement ribs (15) which extend over its width and which extend through the wedge structures (14) of the slide plate (10).

8. A slide valve according to one of the preceding Claims, **characterized in that** a radially projecting rim of the sealing ring (18) is embraced by a retaining member (19) which is screwed onto the wall plate (3).

9. A slide valve according to one of Claims 3 to 8, **characterized in that** the annular seal (22) associated with the wall (1) is offset radially outwards with respect to the annular seal (21) associated with the slide plate (10).

## Revendications

1. Robinet-vanne avec garniture d'étanchéité,
dans le cas duquel un cadre de bâti (6) est prévu pour application contre une paroi présentant une ouverture de sortie (2) et présente, sur une plaque de paroi (3), une découpe de passage (4) correspondant à l'ouverture de sortie,
dans le cas duquel un opercule (10) peut prendre, dans le cadre de bâti, un mouvement de va-et-vient entre une position de fermeture, recouvrant la découpe de passage (4), et une position d'ouverture au moyen d'un dispositif de positionnement (9) appliqué sur le cadre de bâti (6),
dans le cas duquel, en position de fermeture de l'opercule (10), un anneau de garniture d'étanchéité (18), qui peut se comprimer élastiquement perpendiculairement à la direction du mouvement de l'opercule, s'étend le long de la découpe de passage (4),
dans laquelle, en position de fermeture, l'opercule (10), au moyen d'éléments en forme de coin (13, 14) et sous compression de l'anneau de garniture d'étanchéité, est poussé, transversalement à la direction des mouvements de l'opercule, jusqu'à la découpe de passage et
dans le cas duquel, en position de fermeture, une garniture d'étanchéité (22) est prévue pour s'appliquer contre une rive de paroi (17) entourant l'ouverture de sortie (2) de la paroi et dans le cas duquel l'anneau de garniture d'étanchéité (8) s'applique d'un côté contre l'opercule (10),
caractérisé
par le fait que la découpe de passage (4) de la plaque de paroi (3) est agrandie par rapport à l'ouverture de sortie (2) de la paroi (1) et
par le fait que l'anneau de garniture d'étanchéité (18) est indépendant de l'opercule (10) et qu'il est disposé dans la découpe de passage (4), dans le plan de la plaque de paroi (3), l'anneau de garniture d'étanchéité (8) étant prévu de l'autre côté pour s'appliquer contre la rive de paroi (17) qui entoure l'ouverture de sortie (2).

2. Robinet-vanne selon la revendication 1, caractérisé par le fait que l'anneau de garniture d'étanchéité (18) peut se déplacer transversalement dans la découpe de passage (4).

3. Robinet-vanne selon la revendication 1 ou 2, caractérisé par le fait que l'anneau de garniture d'étanchéité (18) présente un anneau métallique support (20) muni, sur chacune des deux faces opposées l'une à l'autre, d'une garniture d'étanchéité annulaire (21, 22).

4. Robinet-vanne selon la revendication 1, 2 ou 3, caractérisé par le fait qu'il est une construction soudée constituée de tôles traitées par trempe et revenu VA.

5. Robinet-vanne selon l'une des revendications précédentes, caractérisé par le fait que la plaque de paroi (3) est munie d'éléments de fixation (5) qui débordent transversalement à la surface de la plaque.

6. Robinet-vanne selon la revendication 5, caractérisé par le fait que des nervures de renforts (16) sont prévues sur les éléments de fixation (5) qui débordent latéralement et sur les barres (12), qui s'y raccordent, du cadre de bâti (6).

7. Robinet-vanne selon l'une des revendications précédentes, caractérisé par le fait que l'opercule (10) est muni de nervures de renfort (15) qui courent sur sa largeur et passent à travers les éléments en forme de coin (14) de l'opercule (10).

8. Robinet-vanne selon l'une des revendications précédentes, caractérisé par le fait qu'un rebord, débordant radialement, de l'anneau de garniture d'étanchéité (8) est saisi, par en dessus, par un élément de maintien (19) vissé dans la plaque de paroi (3).

9. Robinet-vanne selon l'une des revendications 3 à 8, caractérisé par le fait que la garniture d'étanchéité annulaire (22) correspondant à la paroi (1) est radialement décalée vers l'extérieur par rapport à la garniture d'étanchéité annulaire (21) correspondant à l'opercule (10).
